# EUROPÄISCHE PATENTSCHRIFT

(11) **EP 0 236 749 B1**
(45) Veröffentlichungstag und Bekanntmachung des Hinweises auf die Patenterteilung: **29.09.1993**
(21) Anmeldenummer: 87101601.0
(22) Anmeldetag: 06.02.1987
(51) Int. Cl.: B27B 17/08, F16D 49/10

(54) **Einrichtung zum Schnellstopp und wieder Freigeben einer Sägekette**
Device for an instanteneous of the movement of a saw chain
Dispositif pour l'arrêt instantané et le déblocage d'une chaine coupante

(30) Priorität: 14.03.1986 DE 3608523
(43) Veröffentlichungstag der Anmeldung: 16.09.1987
(73) Patentinhaber: ROBERT BOSCH GMBH, 70442 Stuttgart (DE)
(72) Erfinder: Schneider, Helmut, D-7022 Leinfelden-Echterdingen (DE); Zilly, Günter, D-7022 Leinfelden-Echterdingen (DE)

(56) Entgegenhaltungen:
- EP-A- 0 018 626
- DE-A- 2 051 664
- DE-A- 2 217 707
- DE-A- 3 150 769
- FR-A- 2 527 134
- US-A- 3 224 474
- US-A- 3 923 126

## Beschreibung

Die Erfindung geht aus von einer Einrichtung nach der Gattung des Hauptanspruchs. Eine solche Schnellstoppeinrichtung ist schon bekannt geworden aus der DE-PS 22 17 707. Sie hat den Nachteil, daß der antreibende Motor durch eine zusätzliche, bewußte Betätigung vom Kettenantrieb abgekuppelt oder gedrosselt werden muß. Weiter besteht bei dieser Einrichtung die Gefahr, daß der Auslösebügel, mit dem die Bremse zum Bremsen ausgelöst und damit angezogen wird, durch eine ungewollte Gegenbewegung beim Schleudern der Maschine die Bremse wieder löst. Schließlich besteht bei der Motorkettensäge die Gefahr, daß der Antriebsmotor bei angezogener Bremse gestartet wird, mit allen damit verbundenen Risiken. Die Arbei mit einer Motorkettensäge mit einer solchen Schnellstoppeinrichtrnng ist gefährlich.

### Vorteile der Erfindung

Die erfindungsgemäße Einrichtung mit den kennzeichnenden Merkmalen des Hauptanspruchs hat demgegenüber den Vorteil einer erhöhten Betriebssicherheit bei verringerter Unfallgefahr. Durch die Führung des beweglichen Bremselements mittels eines unter Federwirkung gestellten Bolzens, in dessen Bewegungsbereich eine Sperrklinke und ein Schalter zum Zu- und Abschalten des Sägekettenantriebs liegen, sind die besten Voraussetzungen zum stets sicheren und schnellen Abbremsen der Sägekette gegeben.

Dabei ist vorteilhaft, daß das Lösen der Sperrklinke und das Abschalten des Antriebsmotors zugleich erfolgen kann und die Gefahr vermieden wird, daß die Bremse ungewollt wieder gelöst wird. Bei einem Elektromotor als Antriebsmotor ergibt sich hieraus die Möglichkeit, die mechanische Bremse durch eine Wirbelstrombremse zu ergänzen. Es bedarf hierzu nur einer geeigneten Schaltung für den Motor.

Durch die in den Unteransprüchen angegebenen Maßnahmen sind Weiterbildungen und Verbesserungen der im Hauptanspruch angegebenen Schnellstoppeinrichtung möglich. Besonders sicherheitsfördernd ist die Anordnung eines Nockens zum Lösen der Bremse und Überführen des Bolzens in seine Bereitschaftsstellung, der eine Handhabe hat, die am Ende des Lösevorgangs auffällig sichtbar aus dem Motorkettensägengehäuse herausragt bzw. bei betätigter Bremse nicht sofort sichtbar ist. Zur guten Abstimmung der Bremskraft ist die Lagerung des Bolzens in einem Schlitten im Gerätegehäuse vorteilhaft, bei der die Verbindung zwischen dem Schlitten und dem Bolzen durch einen Gewindetrieb erfolgt und durch Drehen des Bolzens die Bremskraft eingestellt werden kann.

### Zeichnung

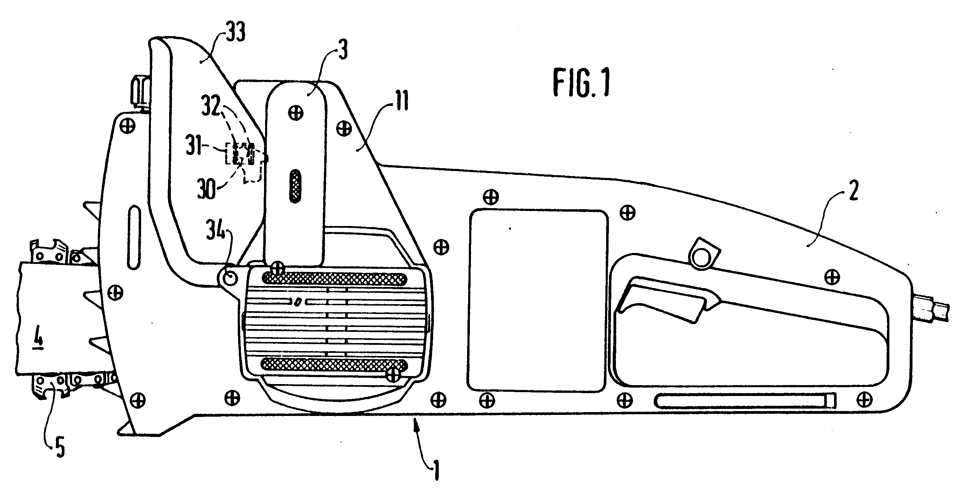

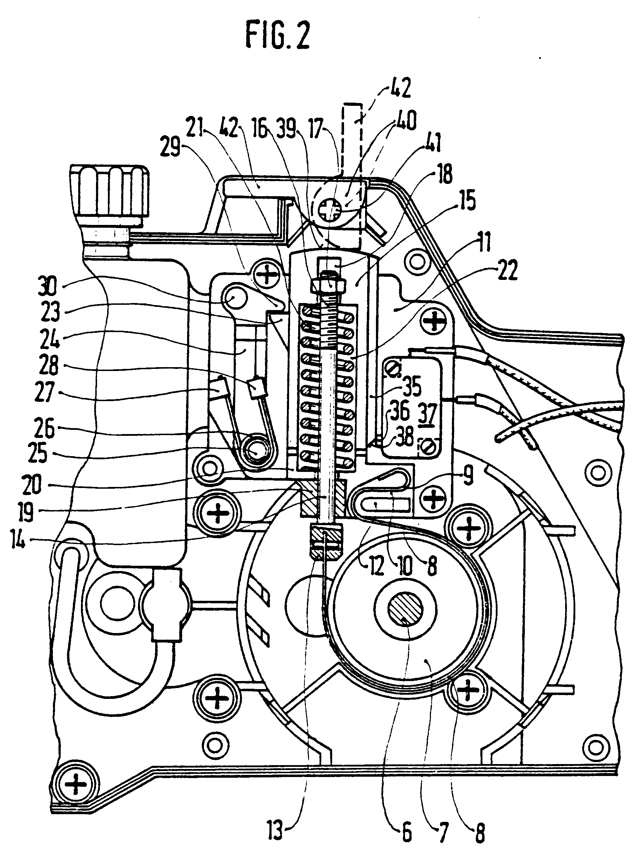

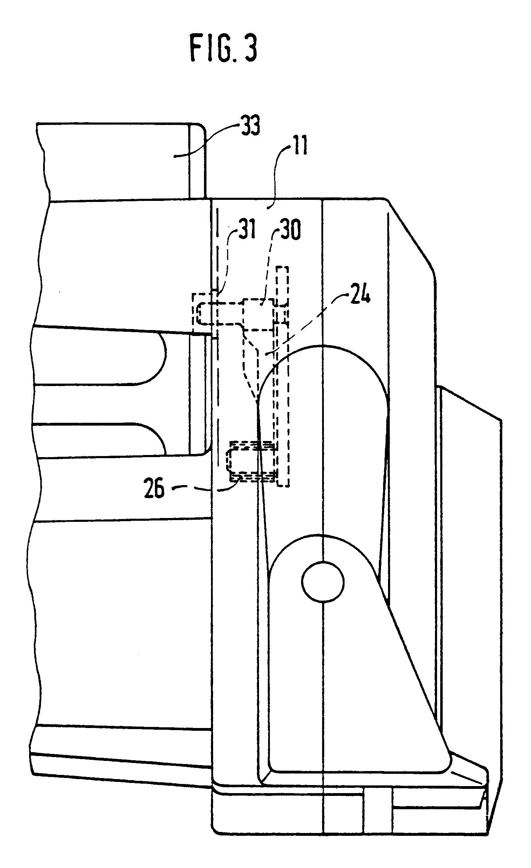

Ein Ausführungsbeispiel des Erfindungsgegenstandes ist in der Zeichnung dargestellt und in der nachfolgenden Beschreibung näher erläutert. Es zeigen Figur 1 eine Gesamtansicht einer erfindungsgemäß ausgestatteten Motorkettensäge, Figur 2 eine Teilansicht zu Figur 1, vergrößert und geschnitten, den Einbau der Bremseinrichtung für den Kettenantrieb zeigend und Figur 3 eine teilweise Seitenansicht zu Figur 1.

### Beschreibung des Ausführungsbeispiels

In einer Motorkettensäge 1 mit einem ersten Handgriff 2 und einem zweiten Handgriff 3, einem Schwert 4 und einer durch dieses geführten Sägekette 5 ist eine erfindungsgemäße Schnellstoppeinrichtung enthalten. Auf einer Motorwelle 6, die ein nicht näher dargestelltes Kettenrad zum Antrieb der Sägekette 5 antreibt, ist eine Bremstrommel 7 befestigt. Diese Bremstrommel 7 ist umschlungen von einem als Bremsband ausgestalteten beweglichen Bremselement 8, dessen eines Ende 9 in eine Tasche 10 in einem Gehäuse 11 der Motorkettensäge 1 festgelegt ist. Ein Steg 12 zwingt das Ende 9 in eine Schlinge und sichert so dieses Ende 9 gegen herausziehen aus der Tasche 10. Das andere Ende des Bremsbandes 8 ist fest verbunden mit einem Kopf 13 eines Bolzens 14. Das Gehäuse 11 führt einen Schieber 15, mit dem der Bolzen 14 mittels eines Gewindes 16 an seinem anderen Ende und einer auf dieses Gewinde 16 aufgeschraubten Mutter 17 verbunden ist. Die Mutter 17 ist dabei eingelassen in eine Ausnehmung 18 dieses Schiebers 15. Ein Lagerböckchen 19 führt zusätzlich den Bolzen 14. Es trägt einen Anschlag 20, der einer Druckfeder 21 als Widerlager dient. Das vom Anschlag 20 abgewendete Ende der Druckfeder 21 liegt am Ende einer Ausnehmung 22 im Schieber 15 an, die zur Aufnahme der gesamten Druckfeder 21 bestimmt ist. Diese Druckfeder 21 ist so vorgespannt, daß sie den Schieber 15 mit den Bolzen 14 stets weg von der Bremstrommel 7 zu treiben sucht. Eine Sperrnase 23 am Schieber 15 ist zum Zusammenwirken mit einer Sperrklinke 24 bestimmt. Diese Sperrklinke 24 lagert auf einem Bolzen 25, auf dem auch eine Schenkelfeder 26 befestigt ist. Der eine Schenkel dieser Schenkelfeder 26 ist an einer gehäusefesten Nase 27 gehalten, während der andere an einer Nase 28 der Sperrklinke 24 anliegt. So drängt die Schenkelfeder 26 die Sperrklinke 24 stets zum Schieber 15 hin. Eine Nase 29 der Sperrklinke 24 ist zum Zusammenwirken mit der Sperrnase 23 am Schieber 15 bestimmt. Der Kopf der Sperrklinke 24, der auch die Nase 29 hat, trägt einen Bolzen 30. Das freie Ende dieses Bolzens 30 durchgreift eine Öffnung 31 in der Wand des Gehäuses 11, die dem zweiten Handgriff 3 benachbart ist. Er greift dabei zwischen zwei Lappen 32 an einem als Schutzschild ausgestalteten beweglichen Teil 33 ein. Dieses Schutzschild deckt den zweiten Handgriff 3 zur Sägekette 5 hin ab. Es ist schwenkbar gelagert auf einem gehäusefesten Bolzen 34. Somit sind die Sperrklinke 24 und das Schutzschild durch den Bolzen 30 direkt verbunden. Die Schenkelfeder 26 hält damit auch das Schutzschild in seiner Ruhestellung zum zweiten Handgriff 3 hin geschwenkt. Eine der Sperrnase 23 gegenüberliegende Rippe 35 des Schiebers 15 bildet eine Gleitbahn für einen Betätigungsbolzen 36 eines Druckschalters 37. Die Vorderkante dieser Rippe 35 ist abgeschrägt und mit 38 bezeichnet. Eine Stirnfläche 39 des Schiebers 15 ist einem Nocken 40 gegenübergestellt. Dieser Nocken 40 lagert auf einem Bolzen 41 und besitzt eine Handhabe 42. In der in Figur 2 gestrichelt eingezeichneten Stellung des Nockens 40 hält dieser den Schieber 15 in der Stellung fest, in der die Nase 29 der Sperrklinke 24 die Sperrnase 23 am Schieber 15 hintergreifen kann (Figur 2). Ist der Nocken 40 in die in Figur 2 stark eingezeichnete Stellung eingeschwenkt, gibt er den Schieber 15 für eine Bewegung frei, die die Druckfeder 21 verursacht, sobald auch die Sperrklinke 24 den Schieber 15 freigibt. Dies geschieht, wenn beim Arbeiten mit der Motorkettensäge, z.B. beim Abästen eines Baumes, die Motorkettensäge zurückschleudert. Die bis dahin den zweiten Handgriff 3 halt ende Hand schlägt gegen das bewegliche Teil 33 und schwenkt dieses zur Sägekette 5 hin. Dabei nimmt das bewegliche Teil 33 über seine Lappen 32 den Bolzen 30 mit, und verschwenkt so die Sperrklinke 24. Mit der Kraft der Druckfeder 21 wird der Schieber 15 und mit ihm der Bolzen 14 in der Darstellung gemäß Figur 2 nach oben getrieben. Dabei wird das bewegliche Bremselement 8 fest um die Bremstrommel 7 gezogen. Die Stopp-Stellug ist hergestellt. Zugleich hat die Rippe 35 den Betätigungsbolzen 36 des Druckschalters 37 freigegeben, so daß dieser aus dem Gehäuse des Druckschalters 37 in Ausschaltstellung herausspringen kann. Damit ist der Motor abgeschaltet, die Bremstrommel 7 und mit ihr die Motorwelle 6 und damit auch die Sägekette 5 werden schnell angehalten. Um nach den Störfall weiterarbeiten zu können, muß der Nocken 40 betätigt werden. Mit Hilfe seiner Handhabe 42 wird er um seinen Lagerbolzen 41 verschwenkt und spannt so die Druckfeder 21. Ist der Schieber 15 und mit ihm der Bolzen 14 so weit gegen die Kraft der Druckfeder 21 verschoben, daß die Nase 29 der Sperrklinke 24 wieder hinter die Sperrnase 23 am Schieber 15 einrasten kann, so ist die Schnellstoppeinrichtung wieder in Bereitschaftsstellung bzw. die Wieder-Freigeben-Stellung gebracht. Dabei hat die Vorderkante 38 der Rippe 35 auch den Betätigungsbolzen 36 des Druckschalters 37 wieder eingedrückt und damit diesen Schalter im Motorstromkreis geschlossen.

Wird nun auch die Schalthandhabe im ersten Handgriff 2 betätigt, läuft die Motorkettensäge 1 erneut an.

## Patentansprüche

1. Einrichtung zum Schnellstopp und Wieder-Freigeben einer Sägekette (5) einer Motorkettensäge (1) mit Sägekettenantrieb, die bei gefährlichen Schleuderbewegungen während des Gebrauchs der Motorkettensäge (1) die Sägekette (5) stoppt, wobei gegen die Hand des Bedienenden ein am Motorkettensägengehäuse (11) angeordneter, insbesondere als Schutzschild ausgestalteter, beweglicher, mit einer Sperre (23, 24, 29) verbundener Teil (33) schlägt, und die eine Bremse (7, 8) enthält, die gegen die Wirkung einer Feder (21) mittels der Sperre (23, 24, 29) in der Stellung Wieder-Freigeben festlegbar ist, wobei die Sperre (23, 24, 29) aus ihrer die Stopp-Stellung bewirkenden in die die Stellung Wieder-Freigeben bewirkende Lage und umgekehrt bewegbar ist, dadurch gekennzeichnet,
daß ein Bremselement (8) an einem längsverschiebbar im Motorkettensägengehäuse (11) gelagerten Bolzen (14) befestigt ist, der durch eine Feder (21) in die die Stopp-Stellung bewirkende Lage gedrängt wird und daß in den Bewegungsbereich des Bolzens (14) oder eines mit diesem verschiebbaren Teils (15) eine mit dem beweglichen Teil (33) verbundene Sperrklinke (24) zum lösbaren Sperren des Bolzens (14) in der die Stellung Wieder- Freigeben bewirkenden Lage und ein Schalter (37) zum Zu- und Abschalten des Sägekettenantriebs eingebracht sind.

2. Einrichtung nach Anspruch 1, dadurch gekennzeichnet, daß das von dem Bremselement (8) der Bremse (7, 8) abgewendete Ende des Bolzens (14) oder eines mit diesem verschiebbaren Teils (15) in den Bewegungsbereich eines Nockens (40) gelegt ist, von dem eine Betätigungshandhabe (42) für den Bedienenden auffällig sichtbar aus dem Motorkettensägengehäuse (11) herausragt, und daß dieser Nocken (40) so bemessen ist, daß er den Bolzen (14) aus der die Stopp Stellung Bewirkenden Stellung in die die Stellung Wiederfreigeben bewirkende Stellung drängen kann, daß die Sperrklinke in ihre Halteposition für den Bolzen (14) einklinken kann.

3. Einrichtung nach Anspruch 1, dadurch gekennzeichnet, daß der Bolzen (14) in einem Schlitten (15) gelagert ist.

4. Einrichtung nach Anspruch 3, dadurch gekennzeichnet, daß der Bolzen (14) für Justierzwecke ein Gewinde (16) hat, mit dem er in eine Mutter (17) eingeschraubt ist, die ihrerseits im Schlitten (15) gehalten ist.

5. Einrichtung nach Anspruch 1, dadurch gekennzeichnet, daß die Bremse (7, 8) eine Bandbremse ist, und daß das bewegliche Ende des Bremselementes (8) dieser Bandbremse mit dem Bolzen (14) fest verbunden ist.

6. Einrichtung nach Anspruch 1, dadurch Gekennzeichnet, daß der Schalter ein Druckschalter (37) ist, dessen Betätigungsbolzen (36) in Bereitschaftsstellung des Bolzens (14) kurz vor dem Ende einer Gleitbahn (35, 38) am Bolzen (14) oder an einem mit diesem verschiebbaren Teil (15) steht, die ihn in Einschaltstellung hält und von der er beim Anziehen der Bremse (7, 8) in seine Ausschaltstellung abgleitet.

7. Einrichtung nach Anspruch 1, dadurch gekennzeichnet, daß das bewegliche Teil (33) der Motorkettensäge (1) ein schwenkbar an deren Gehäuse gelagertes Schutzschild für die am zweiten Handgriff (3) festhaltende Hand des Bedienenden ist.

8. Einrichtung nach Anspruch 4, dadurch gekennzeichnet, daß die Mutter (17) eine von außen zugängliche mit Spezialwerkzeug einstellbare schwergängige Einstellmutter ist, welche im zusammengebauten Zustand der Motorkettensäge eine Feineinstellung der Bremsbandlänge erlaubt.

## Claims

1. Device for quick stopping and re-release of a saw chain (5) of a motor chain saw (1) having a saw chain drive, said device stopping the saw chain (5) if dangerous jumping movements occur during the operation of the motor chain saw (1), wherein a movable part (33) disposed on the motor chain saw casing (11), constructed in particular in the form of a guard shield, and connected to a catch system (23, 24, 29) strikes against the operator's hand, said device also containing a brake (7, 8) which by means of the catch system (23, 24, 29) can be secured in the re-release position against the action of a spring (21), the catch system (23, 24, 29) being movable from its position bringing about the stop position into its position bringing about the re-release position, and vice versa, characterised in that a brake member (8) is fastened to a pin (14) which is mounted for longitudinal sliding in the motor chain saw casing (11) and which is pushed by a spring (21) into the position bringing about the stop position, and in that a catch (24), connected to the movable part (33), for the releasable locking of the pin (14) in the position bringing about the re-release position and a switch (37) for switching the saw chain drive on and off are disposed in the range of movement of the pin (14) or of a part (15) slidable with the latter.

2. Device according to Claim 1, characterised in that that end of the pin (14), or of a part (15) slidable therewith, which is remote from the brake member (8) of the brake (7, 8) is disposed in the range of movement of a cam (40), an actuating handle (42) of which projects out of the motor chain saw casing (11) such as to be conspicuously visible to the operator, and in that said cam 40) has dimensions such that it can push the pin (14) out of the position bringing about the stop position into the position bringing about the re-release position such that the catch can engage in its position in which it secures the pin (14).

3. Device according to Claim 1, characterised in that the pin (14) is mounted in a slide (15).

4. Device according to Claim 3, characterised in that the pin (14) has for adjustment purposes a screw thread (16) by which it is screwed into a nut (17), which in turn is held in the slide (15).

5. Device according to Claim 1, characterised in that the brake (7, 8) is a band brake and that the movable end of the brake member (8) of said band brake is fastened to the pin (14).

6. Device according to Claim 1, characterised in that the switch is a push switch (37) whose actuating pin (36) lies, in the position of readiness of the pin (14), just before the end of a slideway (35, 38) on the pin (14) or on a part (15) slidable with the latter, said slideway holding said pin in the switched-on position and said pin sliding off said slideway into its switched-off position when the brake (7, 8) is applied.

7. Device according to Claim 1, characterised in that the movable part (33) of the motor chain saw (1) is a guard shield, pivotally mounted on the saw casing, for the operator's hand gripping the second handle (3).

8. Device ccording to Claim 4, characterised in that the nut (17) is a stiff adjusting nut which is accessible from the outside and can be adjusted with a special tool and which permits fine adjustment of the length of the brake band when the motor chain saw is in the assembled condition.

## Revendications

1. Dispositif pour l'arrêt instantané et le déblocage d'une chaîne coupante (5) d'une tronçonneuse (1) avec un entraînement pour la chaîne et qui arrête la chaîne coupante (5) lorsqu'il y a des mouvements d'accélération dangereux en cours d'utilisation de la tronçonneuse (1), une pièce (33) reliée à un verrou (23, 24, 29), mobile, prévue sur le carter (11) de la tronçonneuse, notamment sous la forme d'un panneau de protection, vient frapper contre la main de l'utilisateur, et qui comporte un frein (7) maintenu par le verrou (23, 24, 29) en position de libération contre l'action d'un ressort (21), le verrou (23, 24, 29) pouvant passer de sa position d'arrêt à sa position de libération et inversement, dispositif caractérisé en ce que :
un élément de frein (8) est fixé à un goujon (14) monté de manière à coulisser longitudinalement dans le carter (11) de la tronçonneuse, ce goujon étant poussé dans une position assurant la position d'arrêt par un ressort (21) et en ce que dans la zone de déplacement du goujon (14) ou d'une pièce (15) coulissant avec ce goujon, il y a un verrou (24) relié à la pièce mobile (33) pour bloquer de manière amovible le goujon (14) dans la position de libération et un commutateur (37) pour couper et fermer le moyen d'entraînement de la chaîne.

2. Dispositif selon la revendication 1, caractérisé en ce que l'extrémité du goujon (14) ou d'une partie (15) coulissante avec celui-ci, à l'opposé de l'élément (8) du frein (7, 8) est située dans la zone de déplacement d'une came (40) à laquelle appartient une poignée (42) qui est en saillie de façon très apparente pour l'utilisateur par rapport au carter (11) de la tronçonneuse et en ce que cette came (40) est dimensionnée pour pouvoir repousser le goujon (14) de la position assurant la position d'arrêt dans la position assurant le déblocage, le verrou pouvant s'accrocher dans sa position de retenue du goujon (14).

3. Dispositif selon la revendication 1, caractérisé en ce que le goujon (14) est logé dans un chariot (15).

4. Dispositif selon la revendication 3, caractérisé en ce que le goujon (14) possède un filetage (16) pour les ajustages, ce filetage étant vissé dans un écrou (17) lui-même porté par le chariot (15).

5. Dispositif selon la revendication 1, caractérisé en ce que le frein (7, 8) est un frein à ruban et en ce que l'extrémité mobile de l'élément (8) de ce frein à ruban est reliée solidairement au goujon (14).

6. Dispositif selon la revendication 1, caractérisé en ce que le commutateur est un poussoir (37) dont l'ergot d'actionnement (36) est appliqué contre un chemin de glissement (35, 38) du goujon (14) ou contre une pièce (15) coulissante avec le goujon, lorsque le goujon (14) est prêt en position d'attente, chemin qui maintient l'ergot en position de branchement et dont il glisse pour passer dans sa position de coupure lors du serrage du frein (7, 8).

7. Dispositif selon la revendication 1, caractérisé en ce que la partie mobile (33) de la tronçonneuse (1) est un panneau de protection monté pivotant sur le carter pour la main de l'utilisateur qui tient la seconde poignée (3).

8. Dispositif selon la revendication 4, caractérisé en ce que l'écrou (17) est un écrou de réglage à fonctionnement dur, accessible de l'extérieur avec un outil particulier, et qui lorsque la tronçonneuse est montée permet un réglage fin de la longueur de la bande du frein.
